# EUROPEAN PATENT APPLICATION

(11) **EP 1 724 051 A1**
(43) Date of publication of application: **22.11.2006**
(21) Application number: 06000264.9
(22) Date of filing: 07.01.2006
(51) Int. Cl.: B23K 35/30, B23K 35/368

(54) **Flux cored, gas shielded welding electrode**

(30) Priority: 18.05.2005 US 130739
(71) Applicant: LINCOLN GLOBAL, INC., Santa Fe Springs CA 90670 (US)
(72) Inventor: Karogal, Nikhil U., Glen Ellyn IL 60137 (US)
(74) Representative: Hennicke, Ernst Rüdiger

(57) **Abstract**

A flux cored, gas shielded arc welding electrode for depositing a weld metal with low diffusible hydrogen and having tensile strength greater than 620 N/mm² (90 Kpsi) and a yield strength greater than 550 N/mm² (80 Kpsi). The electrode includes a nickel free steel sheath with a carbon content of less than 0.05% of the sheath and a core in the range of 13-17% of the electrode wherein the core includes primary alloy particles of iron, manganese, magnesium and nickel with a minor amount of secondary alloy particles of a silicon alloy and a boron alloy in a rutile based slag system. The nickel has a controlled amount in the general range of 1.0-2.0% by weight of the electrode and the rutile is 40-60% by weight of the core.

## Description

### FLUX CORED, GAS SHIELDED WELDING ELECTRODE

The present invention relates to the art of electric arc welding and more particularly to a new and improved flux cored, gas shielded arc welding electrode that produces a weld metal with ultra-high tensile strength.

### INCORPORATION BY REFERENCE

The present invention relates to a specific flux cored gas shielded arc welding electrode for depositing a weld metal with low diffusible hydrogen and high tensile strength. A unique combination of components in the core of the electrode facilitates these advantageous characteristics without substantially increasing cost. As background information, US 4,833,296 (Crockett) discloses a flux cored electrode which is self shielding and includes a low percentage of manganese and no magnesium in the core. These constraints prevent the electrode from resulting in a low diffusible hydrogen or ultra-high tensile strength weld metal as anticipated by use of the present invention. However, this self shielding type of electrode is incorporated herein as background technology even though it is a different type of electrode. In US 5,118,919 (Chai), a flux cored electrode for high yield strength employs a relatively low amount of nickel together with a high amount of carbon with no magnesium. Thus, the increased strength is obtained primarily by the high carbon content. As in the electrode of the Crockett patent, Chai does not use a boron alloy as a secondary alloy for reducing the brittleness of the resulting high strength weld metal produced by the electrode. This patent is also incorporated by reference herein. The use of a boron alloying agent is taught by US 5,365,036 (Crockett); however, this flux cored gas shielded electrode has a low nickel content, a high carbon content and no magnesium as in the present invention. Thus, the yield strength obtained in the weld metal does not have the toughness and lack of brittleness as in the electrode of the present invention. This second Crockett patent is also incorporated by reference herein. The recent patent on a flux cored electrode is US 6,855,913 (Nikodym), which is incorporated by reference. This patent specifically teaches a low nickel content and requires a combination of graphite and a compound of potassium to produce a low yield strength weld metal. The strength is controlled by the graphite to produce an electrode used in an alternating current welding process. This electrode does not have the constituents of the present invention and employs low nickel in the core with relatively high carbon as in the other background patents. The high strength is obtained by increased carbon with a low amount of nickel, whereas the present invention reverses this relationship in order to obtain high yield strength and ultra-high tensile strength.

### THE INVENTION

The present invention is an improvement of the technology set forth in the several background patents incorporated by reference herein. In accordance with the present invention, there is provided a flux cored, gas shielded arc welding electrode for depositing a weld metal with a low diffusible hydrogen with a tensile strength greater than 620 N/mm² (90 Kpsi) and a yield strength greater than 550 N/mm² (80 Kpsi). This novel electrode includes a nickel free sheath with a carbon content of less than 0.05% of the sheath and a core comprising 13-17% of the weight of the electrode. Consequently, the total amount of carbon is substantially less than about 0.02% in the resulting weld metal. The core includes a set of primary alloy particles and a set of second alloy particles. The primary alloy particles include iron, manganese, magnesium and nickel. The secondary alloy particles include a silicon alloy and a boron alloy. The particles in the core have a size less than about a 40 mesh screen size and include a rutile based slag system. The nickel has a partial size less than a 50 mesh screen size and a controlled amount. This controlled amount is in the general range of 1.0-2.0 by weight of the electrode itself. The small nickel content is greater than the prior art and is controlled below the level for stainless steel.

Consequently, the weld metal includes greater than 1.0% nickel and is alloyed with manganese. Magnesium is included. Consequently, the novel electrode produces a diffusible hydrogen level in the weld metal of less than about 7.0 m/100 grams. The tensile strength is greater than 620 N/mm² (90 Kpsi), and preferably greater than 690 N/mm² (100 Kpsi). The novel electrode uses a controlled, elevated amount of nickel with other constituents to obtain a desired high tensile strength weld metal. The controlled amount of nickel is drastically less than the nickel used in welding of stainless steel as shown in US 6,620,261 (Kim), also incorporated by reference herein.

The primary object of the present invention is the provision of a novel flux cored, gas shielded arc welding electrode which produced a low diffusible hydrogen and a high tensile strength greater than 620 N/mm² (90 Kpsi).

Another object of the present invention is the provision of an electrode, as defined above, which electrode has a controlled, higher level of nickel in the general range of 1.0-2.0 of the weight of the total electrode together with a rutile based slag system where the rutile approaches about 50% of the core.

Yet another object of the present invention is the provision of an electrode, as defined above, which electrode has a low amount of carbon and a higher controlled level of nickel to create a high strength weld metal together with a boron alloy to control the grain size of the resulting weld metal so that it is not made brittle by the substantial increase in tensile strength.

These and other objects and advantages will become apparent from the following description of the preferred embodiment of the present invention.

In accordance with the invention, the sheath around the core has a carbon content of less than 0.05% to provide a substantially less percentage of carbon in the resulting weld metal. The nickel in the weld metal is controlled to be in the general range of 1.0-2.0%. The weld metal does not involve a wide range of nickel as in some general purpose electrodes. The nickel is obtained wholly from the alloying agent in the core of the electrode. The core of the electrode has the constituents as set forth in Table I.

**TABLE I**

| **Constituent** | **Range** | **Preferred** |
|---|---|---|
| Rutile | 40-60% | 47.5% |
| Manganese Powder | 10-15% | 13.5% |
| Ferro titanium | 2-4% | 3.5% |
| Ferro Silicon | 4-8% | 6.0% |
| Fluoride | 3-8% | 6.0% |
| Ferro Boron | 0.2-0.6% | 0.4% |
| Iron Powder | 2-4% | 3.3% |
| Magnesium Powder | 2-6% | 4.3% |
| Nickel Powder | 5-10% | 5.5%-9.6% |

This electrode has been produced and results in a weld metal which has a tensile strength greater than 690 N/mm² (100 Kpsi) and a yield strength greater than 550 N/mm² (80 Kpsi). Furthermore, the diffusible hydrogen in the resulting weld metal is substantially less than produced by a class H8 electrode. These advantages are not obtained by the prior art to which the present invention is directed.

## Claims

1. A flux cored, gas shielded arc welding electrode for depositing a weld metal having tensile strength greater than 620 N/mm² (90 Kpsi) and a yield strength greater than 550 N/mm² (80 Kpsi), said electrode including a nickel free steel sheath with a carbon content of less than 0.05% of the sheath and a core in the range of 13-17% of the electrode, said core including primary alloy particles of nickel with a minor amount of secondary alloy particles of a boron alloy in a rutile based slag system wherein said nickel has a controlled amount in the general range of 1.0-2.0% by weight of the electrode.

2. An electrode as defined in claim 1, including particles of iron, manganese and/or magnesium as further primary alloy particles.

3. An electrode as defined in claim 1 or 2, including particles of a silicon alloy as further secondary alloy particles.

4. An electrode as defined in any one of claims 1 to 3, said weld metal having low diffusible hydrogen.

5. An electrode as defined in any one of claims 1 to 4, wherein said carbon in said sheath is in the range of 0.03 to 0.05% by weight of said sheath.

6. An electrode as defined in any one of claims 1 to 5, wherein said rutile is 40-60% by weight of said core.

7. An electrode as defined in any one of claims 1 to 6, wherein said core contains, by weight of the core:
(a) 40-60% rutile
(b) 10-15% manganese powder
(c) 2-5% iron powder
(d) 2-5% magnesium powder
(e) 4-10% nickel powder.

8. An electrode as defined in any one of claims 1 to 7, wherein said secondary alloy particles include, by weight of the core:
(a) 4-8% silicon alloy
(b) 0.2-0.5% boron alloy.

9. An electrode as defined in any one of claims 1 to 8, including as a primary alloy particles and alloy of titanium.

10. An electrode as defined in any one of claims 1 to 9, wherein said particle size of said primary alloy particles is less than a 50 mesh screen.

11. An electrode as defined in any one of claims 1 to 10, wherein said core comprises, by weight of said core:
(a) 47.5% rutile
(b) 13.5% manganese powder
(c) 3.5% ferro titanium
(d) 6.0% ferro silicon
(e) 2.2% cast iron powder
(f) 6.0% fluoride
(g) 1.5% titanate
(h) 0.4% ferro boron
(i) 3.3% iron powder
(j) 4 .3 % magnesium powder
(k) 5.5-9.6% nickel powder.
